# EUROPEAN PATENT APPLICATION

(11) **EP 0 623 872 A1**
(43) Date of publication of application: **09.11.1994**
(21) Application number: 94106698.7
(22) Date of filing: 28.04.1994
(51) Int. Cl.: G06F 3/033

(54) **Apparatus for processing information by executing an operation selected from data processing operations in accordance with a co-ordinate value**

(30) Priority: 28.04.1993 JP 101692/93
(71) Applicant: NEC CORPORATION, Tokyo (JP)
(72) Inventor: Kiyoshige, Tomoko, c/o NEC Corporation, Tokyo (JP); Suzuki, Akira, c/o NEC Yonezawa, Ltd., Yonezawa-shi, Yamagata (JP)
(74) Representative: Betten & Resch

(57) **Abstract**

In an apparatus for processing information by executing a selected operation selected from a plurality of processing operations, a detecting arrangement (11) detects a selected position in a predetermined area having a first and a second area and produces a coordinate value representative of the selected position. A display unit (12) is placed in the first area. An operation selecting portion (14) is placed in the second area. When the selected position is on the display unit, a processing unit (17) makes the display unit display an image with reference to the coordinate value. When the selected position is on the operation selecting portion, the processing unit selects, as the selected operation, one of the processing operations in accordance with the coordinate value. It is preferable that a digitizer is used as the detecting arrangement for detecting the selected position in accordance with a predetermined electric wave emitted from a stylus pen (13).

## Description

### Background of the Invention:

This invention relates to an information processing apparatus having various functions and, in particular, to an information processing apparatus for processing information by executing, as a selected operation, one selected from a plurality of processing operations which are for performing the various functions, respectively.

In a conventional information processing apparatus of the type described, a stylus pen is often used instead of a keyboard or a mouse to enter characters or numerals handwritten by an operator and to select, as the selected operation, one from the processing operations.

Such an information processing apparatus comprises a digitizer and a liquid crystal display unit located on an upper surface of the digitizer. The liquid crystal display unit has an image display area substantially equal to that of the digitizer. When the stylus pen indicates a selected position of the image display area on the liquid crystal display unit, the digitizer detects the selected position to produce a coordinate value representative of the selected position in the manner known in the art. With reference to the coordinate value, the information processing apparatus processes information by executing the selected operation that is selected from the processing operations.

However, it is difficult in the information processing apparatus to display a reverse video on the liquid crystal display unit and to carry out any inherent processing operation of hardware, such as a reboot operation known in the art. This is because the information processing apparatus is not provided with any keyboard in its standard model.

Particularly, in case where the selected operation is selected from the processing operations during execution of application software, it is necessary to repeat a plurality of times an operation of the stylus pen in the image display area on the liquid crystal display unit in order to open and close a file known in the art. This results in a less operability in selecting the selected operation from the processing operations.

### Summary of the Invention:

It is therefore an object of this invention to provide an information processing apparatus wherein access to the operations inherent to the hardware is readily available.

It is another object of this invention to provide the information processing apparatus of the type in which, in case where selection of the selected operation from the processing operations is performed during execution of the application software, such selection can be readily carried out by the use of the stylus pen to result in a further improvement of operability in selecting the selected operation from the processing operations.

Other objects of this invention will become clear as the description proceeds.

According to an aspect of this invention, there is provided an apparatus for processing information by executing a selected operation selected from a plurality of processing operations. The apparatus comprises detecting means for detecting a selected position in a predetermined area to produce a coordinate value representative of the selected position. The predetermined area has a first and a second area. The apparatus further comprises displaying means connected to the detecting means for displaying an image with reference to the coordinate value when the selected position is in the first area and selecting means connected to detecting means for selecting, as the selected operation, one of the processing operations in accordance with the coordinate value when the selected position is in the second area.

According to another aspect of this invention, there is provided an apparatus for processing information by executing a selected operation selected from a plurality of processing operations. The apparatus comprises a digitizer for detecting a selected position to produce a coordinate value representative of the selected position. The digitizer has a first and a second area, a display unit placed in the first area of the digitizer for displaying an image. The apparatus further comprises an operation selecting portion placed in the second area of the digitizer for selecting, as the selected operation, one of the processing operations, and a processing unit connected to the digitizer, the display unit, and the operation selecting portion for making the display unit display the image with reference to the coordinate value when the selected position is on the display unit and for executing the selected operation in accordance with the coordinate value when the selected position is on the operation selecting portion.

According to still another object of this invention, there is provided a method for processing information by executing a selected operation selected from a plurality of processing operations. The method comprises a step of detecting a selected position of a predetermined area to produce a coordinate value representative of the selected position. The predetermined area has a first and a second area. The method further comprises steps of displaying an image with reference to the coordinate value when the selected position is in the first area and selecting, as the selected operation, one of the processing operations in accordance with the coordinate value when the selected position is in the second area.

### Brief Description of the Drawing:

Fig. 1 is a view for describing a conventional information processing apparatus;
Fig. 2 is a view for describing an information processing apparatus according to an embodiment of this invention; and
Fig. 3 is a block diagram of the information processing apparatus illustrated in Fig. 2.

### Description of the Preferred Embodiment:

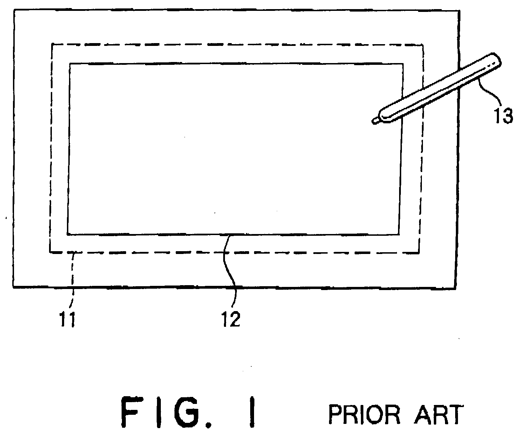

Referring to Fig. 1, description will at first be made as regards a conventional information processing apparatus for a better understanding of this invention. The conventional information processing device is of a pen-input type and comprises a digitizer 11 having a predetermined area and a liquid crystal display unit 12 located on the digitizer 11. The liquid crystal display unit 12 has an image display area which is substantially equal to or slightly less than the predetermined area of the digitizer 11.

In the manner known in the art, a stylus pen 13 is used to enter characters or numerals handwritten by an operator. When the stylus pen 13 indicates a particular or selected position in the predetermined area, in particular, in the image display area on the liquid crystal display unit 12, the digitizer 11 detects the selected position to produce a coordinate value representative of the selected position. With reference to the coordinate value, a processing unit (not shown) processes information or data to make the liquid crystal display unit 12 display an image on the image display area. In this connection, all of the image display area is used as a working area upon execution of application software with frequent projection of images.

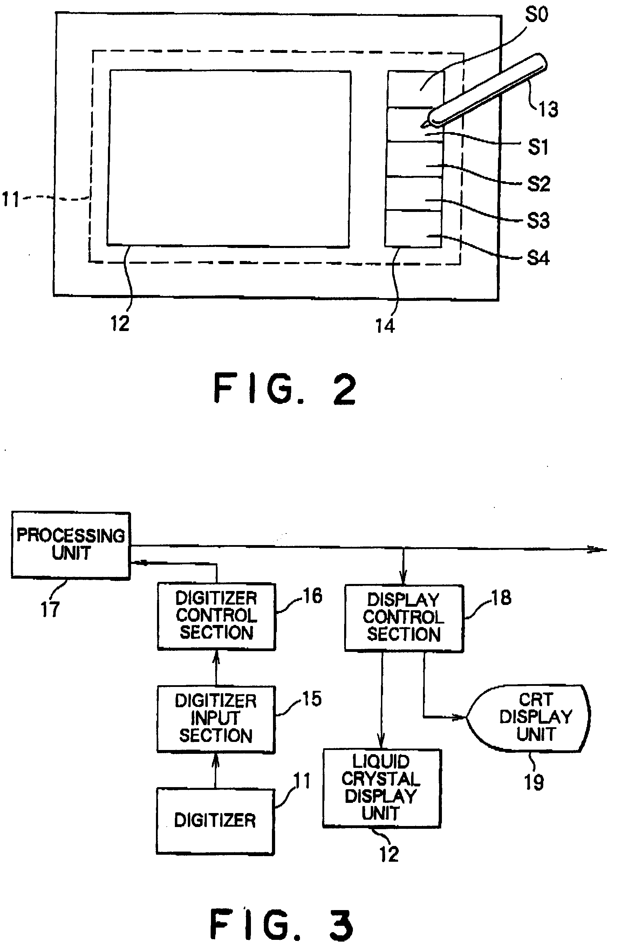

Turning to Fig. 2, the description will be directed to an information processing apparatus according to an embodiment of this invention. The information processing apparatus is of a pen-input type and is for processing information by executing a selected operation selected from a plurality of processing operations known in the art. In the information processing apparatus, it is to be noted that the image display area of the liquid crystal display unit 12 is greatly less than the predetermined area of the digitizer 11 and located in a relatively left position or a first area of the predetermined area. The stylus pen 13 is for indicating the selected position in the predetermined area and will be referred to as an indicating arrangement.

The information processing apparatus further comprises an operation selecting portion 14 located in a relatively right position or a second area of the digitizer 11. The operation selecting portion 14 is for selecting, as the selected operation, one of the data processing operations. In other words, the operation selecting portion 14 is for carrying out various data processing functions independently from application software in the manner which will later be described in detail.

The stylus pen 13 comprises a generating element (not shown) for generating a predetermined electric wave of a predetermined frequency and has an end portion for emitting the predetermined electric wave. In accordance with the predetermined electric wave, the digitizer 11 detects the selected position to produce the coordinate value that is representative of the selected position. In this event, the digitizer 11 is referred to as a detecting arrangement. In this connection, the liquid crystal display unit 12 has a characteristic in that the image is displayed without being affected by the predetermined electric wave.

Turning to Fig. 3, the description will be made as regards the information processing apparatus in detail. In the manner which will presently be described, the information processing apparatus further comprises a digitizer input section 15, a digitizer control section 16, a processing unit 17, a display control section 18, and a CRT display unit 19. The digitizer input section 15 is connected to the digitizer 11 and is for receiving the coordinate value from the digitizer 11. The digitizer control section 16 is connected to the digitizer input section 15 and the processing unit 17 and is for delivering the coordinate value from the digitizer input section 15 to the processor 17. The processing unit 15 is connected to the display control section 18 and is for processing the coordinate value into a processed signal to supply the processed signal to the display control section 18. The display control section 18 is connected to the CRT display units 12 and 19 and is for controlling a display operation of each of the liquid crystal and the CRT display units 12 and 19 in response to the processed signal.

Next, the description will proceed to operation of the information processing apparatus.

When the liquid crystal display unit 12 is tapped or indicated by the stylus pen 13 with emitting the predetermined electric wave from the end portion thereof, the digitizer 11 receives the predetermined electric wave to produce the coordinate value. Detected with the coordinate value, the digitizer input section 15 supplies the coordinate value through the digitizer control section 16 to the processing unit 17. Supplied with the coordinate value, the processing unit 17 processes an ordinary operation such as character input in accordance with the application software in the manner known in the art.

Referring to Fig. 2 shortly, the operation selecting portion 14 comprises five selecting sections, namely, zeroth, first, second, third, and fourth selecting sections S0, S1, S2, S3, and S4 which are placed on different positions of the second area of the digitizer 11. The zeroth, the first, the second, the third, and the fourth selecting sections S0, S1, S2, S3, and S4 are preassigned in one-to-one correspondence with various functions which are performed by executing the above-mentioned processing operations, respectively. It is preferable that the zeroth section S0 is preassigned with a reboot operation known in the art and that each of the first through the fourth selecting sections S1 to S4 are preassigned with any desired ones of the various functions by the operating system and the application software. In this event, the processing unit 17 is referred to as a determining arrangement which is for determining the processing operations.

In order to select the selected operation from the processing operations, an operator taps or indicates, as a selected section, one of the zeroth through the fourth selecting sections S0 to S4 of the operation selecting portion 14 by the stylus pen 13 with emitting the predetermined electric wave from the end portion thereof. Responsive to the predetermined electric wave, the digitizer 11 produces the coordinate value. Responsive to the coordinate value, the digitizer input section 15 produces an identification signal identifying the selected one of the zeroth through the fourth selecting sections S0 to S4.

Supplied with the identification signal, the digitizer control section 16 generates an interruption instruction unaccessible by the application software so that the identification signal are sent to the processing unit 17 even during operation of the application software. With reference to the identification signal, the processing unit 17 identifies the selected section among the zeroth through the fourth selecting sections S0 to S4 and executes the selected operation that is selected from the processing operations. In other words, the processing unit 17 selects, as the selected operation, one of the processing operations when the selected position is in the second area. In this event, the processing unit 17 is referred to as a selecting arrangement.

As described above, in case where selection of the selected operation is performed during execution of the application software, such selection can be readily carried out by the use of the stylus pen 13 within the operation selecting portion 14. This results in a further improvement of operability in selecting the processing operations.

While this invention has thus far been described in connection with only a single embodiment thereof, it will readily be possible for those skilled in the art to put this invention into practice in various other manners. For example, the operation selecting portion may comprise six or more selecting sections although five selecting sections are exemplified. Another detecting arrangement may be used instead of the digitizer.

## Claims

1. An apparatus for processing information by executing a selected operation selected from a plurality of processing operations, said apparatus comprising detecting means (11) for detecting a selected position in a predetermined area to produce a coordinate value representative of said selected position, displaying means (12) connected to said detecting means for displaying an image with reference to said coordinate value, and selecting means (17) for selecting, as said selected operation, one of said processing operations, characterized in that said predetermined area has a first and a second area, said displaying means displaying said image when said selected position is in said first area, said selecting means being connected to detecting means and carrying out selection of said selected operation in accordance with said coordinate value when said selected position is in said second area.

2. An apparatus as claimed in Claim 1, further comprising indicating means (13) for indicating said selected position.

3. An apparatus as claimed in Claim 2, wherein said indicating means comprises an end portion and a generating element for generating a predetermined electric wave to emit said predetermined electric wave from said end portion, said detecting means detecting said selected position in accordance with said predetermined electric wave.

4. An apparatus as claimed in Claim 3, wherein each of said displaying and said selecting means is on said predetermined area and is transparent for said predetermined electric wave.

5. An apparatus as claimed in Claim 4, wherein said displaying means has a characteristic in that said image is displayed without being affected by said predetermined electric wave.

6. An apparatus as claimed in Claim 1, further comprising determining means (17) for determining said processing operations.

7. An apparatus for processing information by executing a selected operation selected from a plurality of processing operations, said apparatus comprising a digitizer (11) for detecting a selected position to produce a coordinate value representative of said selected position, a display unit (12) placed on said digitizer for displaying an image; an operation selecting portion (14) for selecting, as said selected operation, one of said processing operations, a processing unit (17) connected to said digitizer and said display unit for making said display unit display said image with reference to said coordinate value when said selected position is on said display unit, characterized in that said digitizer has a first and a second area, said display unit being placed on said first area of the digitizer, said operation selecting portion being placed on said second area of the digitizer, said processing unit further being connected to said operation selecting portion and further being for executing said selected operation in accordance with said coordinate value when said selected position is on said function selecting portion.

8. An apparatus as claimed in Claim 7, further comprising a stylus pen (13) for emitting a predetermined electric wave, said digitizer detecting said selected position in accordance with said predetermined electric wave.

9. An apparatus as claimed in Claim 8, wherein said display unit is transparent for said predetermined electric wave.

10. An apparatus an claimed in Claim 9, wherein said display unit has a characteristic in that said image is displayed without being affected by said predetermined electric wave.

11. A method for processing information by executing a selected operation selected from a plurality of processing operations, said method comprising steps of:
detecting a selected position of a predetermined area to produce a coordinate value representative of said selected position, said predetermined area having a first and a second level;
displaying an image with reference to said coordinate value when said selected position is in said first area; and
selecting, as said selected operation, one of said processing operations in accordance with said coordinate value when said selected position is in said second area.
